# EUROPEAN PATENT SPECIFICATION

(11) **EP 0 654 449 B1**
(45) Date of publication and mention of the grant of the patent: **30.12.1998**
(21) Application number: 95100758.2
(22) Date of filing: 15.05.1991
(51) Int. Cl.: C02F 5/08, C02F 5/10, C02F 5/12

(54) **Silica scale inhibition**
Verhütung von Kieselsäureablagerungen
Inhibition de tartre de silice

(30) Priority: 23.05.1990 US 527420
(43) Date of publication of application: 24.05.1995
(62) Divisional of application: 91304381.6
(73) Proprietor: ROHM AND HAAS COMPANY, Philadelphia, Pennsylvania 19106-2399 (US)
(72) Inventor: Bardsley, Judy Hughes, Salford, Pennsylvania 18957 (US); Robertson, Susan Tabb, Ambler, Pennsylvania 19002 (US); Hann, William Mathis, Gwynedd, Pennsylvania 19346 (US); Schulman, Jan Edward, Newtown, Pennsylvania 18940 (US)
(74) Representative: Angell, David Whilton

(56) References cited:
- EP-A- 0 271 035
- DE-A- 3 743 739
- US-A- 4 288 327
- US-A- 4 666 609
- PATENT ABSTRACTS OF JAPAN vol. 13, no. 293 (C-615) 6 July 1989 & JP-A-01 090 097 (KURITA WATER IND LTD) 5 April 1989 & DATABASE WPI Section Ch, Week 8920, Derwent Publications Ltd., London, GB; Class D15, AN 89-147349
- PATENT ABSTRACTS OF JAPAN vol. 10, no. 269 (C-372) 12 September 1986 & JP-A-61 090 797 (KURITA WATER IND) 8 May 1986 & DATABASE WPI Section Ch, Week 8625, Derwent Publications Ltd., London, GB; Class D15, AN 86-158685

## Description

This invention is concerned with a method for controlling silica and silicate fouling problems in aqueous systems. More particularly the invention is concerned with the use of certain low molecular weight water-soluble (meth)acrylic or maleic acid based polymers to inhibit deposition of magnesium silicate and other silicate and silica scales on surfaces.

Silica is one of the major fouling problems in many processes using water. Silica is difficult to deal with because it can assume many low solubility chemical forms depending on the conditions. Below about pH 7 for example, monomeric silica tends to polymerize to form oligomeric or colloidal silica. At higher pH's particularly above about pH 9.5, silica can form monomeric silicate ion. Since conversion can be slow, all of these forms may exist at any one time depending on the history of the system. Furthermore, the silicate ion can react with polyvalent cations like magnesium and calcium commonly present in process waters to produce salts with very limited solubility. Thus it is common for a mixture of many forms to be present: monomeric, oligomeric and colloidal silica; magnesium silicate, calcium silicate and other silicate salts. In describing this complex system, it is common practice to refer to the mixture merely as silica or as silica and silicate. Herein these terms are used interchangeably.

A further complication in controlling silica and silicate fouling is that colloidal silica tends to be more soluble as temperature is raised, while polyvalent metal salts of the silicate ion tends to be less soluble with increasing temperature.

Two possible mechanisms for controlling silica or silicate salts from fouling or depositing on a surface during a process are : 1) inhibiting precipitation of the material from the process water , and 2) dispersing the material once it has formed in the bulk water to prevent it from attaching to surfaces. The exact mechanism by which a specific scale inhibitor functions, however, is not well understood. The additives of this invention may be operating by either or both of these routes.

Processes that would likely benefit from a material that could inhibit the deposition of silica or silicate salts from water are, for example: cooling water, boiler water, geothermal process to generate electricity or for heating, and sugar (particularly cane and beet) processing. In each of these processes, heat is transferred to or from the water. In three of these processes, cooling water, boiler water and sugar processing, heat is added to the water and evaporation of some of the water takes place. As the water is evaporated the silica (or silicates) will concentrate. If the silica concentration exceeds its solubility, it can deposit to form either a vitreous coating or an adherent scale that can normally be removed only by laborious mechanical or chemical cleaning. In geothermal processes, hot water laden with silica or silicates is used to heat homes or factories or is converted to steam to drive a turbine and generate electricity. At some point in each of the above four processes, heat is extracted from the water, making any dissolved silicate less soluble and thus likely to deposit on surfaces.

The current practice in each of these four processes is to mechanically limit the amount of silica or silicates that build up in the water so that the catastrophic consequences of deposition of these compounds does not occur. For example, in cooling water, the accepted practice is to limit the amount of silica or silicates to about 180 ppm, expressed as SiO₂. In addition, deposition of CaCO₃ (which can act as a nucleating agent for silica or silicates to deposit upon) is controlled by well known inhibitors such as phosphonates or polymers such as polyacrylic acid or polymaleic acid. Reportedly, the current best available polymer for control of silica or silicates in cooling water is polymaleic acid of about 1000 to 1300 weight average molecular weight. Because the silica is limited to 180 ppm, and because in many arid areas of the US and other parts of the world make-up water may contain from 50 to 90 ppm silica, cooling water can only be concentrated 2 to 3 times before the risk of silica or silicate deposition becomes too great. A polymer that would enable greater re-use or cycling of this silica-limited cooling water would be a great benefit to these areas.

Similarly in boiler water, the American Society of Mechanical Engineers recommends that silica be limited to certain levels depending on the operating pressure of the boiler. For example, in low pressure boilers (less than 300 psig (2.07 M Pa gauge)) the amount of silica, as SiO₂, should be kept below 150 ppm. As the pressure is raised, the level of silica that can be tolerated in the recirculating boiler water becomes progressively less. A polymer that would enable boilers to operate at higher cycles of concentration, particularly low pressure boilers where silica volatilization is not a great concern, would allow more energy-efficient use of the heated water.

In sugar production, especially cane sugar where silica levels are highest, the sugar evaporators are cleaned after about 2 to 3 months to prevent excessive deposition of silica. The cleaning normally involves a vigorous mechanical brushing with harsh chemicals to remove the silica and other salts. An inhibitor that could extend the length of the sugar evaporation processing between cleanings or that would make the cleaning less arduous would extend the life of the evaporators and increase their output during a season.

Geothermal processes presently control the temperature drop as a means of preventing the deposition of silica on equipment surfaces. An inhibitor that limits silica deposition would allow the temperature drop in this process to be greater, and allow more efficient use of the heat in the geothermally produced water.

In addition to preventing fouling of surfaces with silica or silicates, an inhibitor or dispersant for this foulant would allow the use of higher levels of silica/silicates for corrosion control. In potable water, silicates are added to the water to prevent "red water" from corrosion of water mains made of ferrous metals. In cooling water, an inhibitor has long been sought after that would enable silica to be used as an a non-toxic corrosion inhibitor.

In enhanced oil recovery, silicates are added to the drive fluid to help move the oil through the formation. An effective silica-inhibitor would prevent the formation from being clogged with metal ion silicates, thus allowing the efficient recovery of the oil from the underground formation.

(Meth)acrylic acid and maleic acid based polymers have long been used in water treatment. Co- and ter- polymers of (meth)acrylic acid with 2-acrylamid-2-methyl propane sulfonic acid (AMPS) in particular have been proposed for inhibiting sulfate, carbonate and phosphate scale as well as for other treatments such as removing rust. For example, US-A-3,332,904; US-A-3,692,673; US-A-3,709,815;
US-A-3,709,816; US-A-3,928,196; US-A-3,806,367 and US-A-3,898,037 are directed to using AMPS-containing polymers. GB-B-2,082,600 proposes an acrylic acid/AMPS/acrylamide polymer and WO-A-83/02607, WO-A-83/02608 and EP-A-0271035 are directed to (meth)acrylic acid/AMPS copolymers as inhibitors of these scales.

In addition US-A-4,711,725 discloses the use of terpolymers of (meth)acrylic acid/AMPS/substituted acrylamides for inhibiting the precipitation of calcium phosphate.

The inhibition of silica and silicate scaling specifically has also been addressed in several publications. US-A-4,029,577 is directed to the use of acrylic acid/hydroxylated lower alkyl acrylate copolymers to control a spectrum of scale imparting precipitates including magnesium and calcium silicates. US-A-4,499,002 discloses (meth)acrylic/(meth)acrylamide/alkoxylated primary alcohol ester of (meth)acrylic acid for the same purpose. JP-A-61-107997 and JP-A-61-107998 are directed to polyacrylamide and selected (meth)acrylic acid copolymers to control silica scale. US-A-4666609 and JP-A-01090097 are directed to the use of copolymers of maleic acid with isobutylene or styrene sulphonic acid to control silicate precipitate formation.

DE-A3743738 discloses the use of terpolymers comprising (meth)acrylic acid/AMPS/am to prevent silica scale in dishwashing machines.

The term copolymer is widely employed in publications, but not always with the same meaning, sometimes referring to a polymer from only two monomers and other times to a polymer from two or more. To avoid ambiguity, the term "copolymer", as used herein, is defined as a polymer being derived from only two monomers and a terpolymer is a polymer derived from three or more monomers.

Despite the large number of publications in the area of scale inhibitors, none provide an effective method to control the troublesome silica and silicate scale. Limiting the level of silica introduced or allowed to accumulate in the aqueous system is still the primary method of dealing with the problem.

It is, therefore, an objective of this invention to provide a method that effectively inhibits silica depositions in aqueous systems.

It is an objective to provide a chemical method using additives to replace the mechanical techniques of dealing with silica scaling by limiting the concentration of silica allowed to build-up in the system or by the labour intensive removal of silica deposits.

We have unexpectedly found that the difficult silica and silicate scaling problem in aqueous systems can be controlled by the addition of one or more selected materials to the aqueous system. The selected materials are certain low molecular weight (meth)acrylic or maleic acid-based terpolymers, or salts thereof.

The terpolymers contain units derived from the following:
a)from 30 to 80 weight percent of (meth)acrylic acid or maleic acid; and
b)from greater than 11 to 65 weight percent of a (meth)acrylamido methyl propane sulfonic acid or styrene sulfonic acid; and
c)one or more of:
   (i)from 5 to 30 weight percent of (meth)acrylamide or a substituted (meth)acrylamide, and
   (ii)from 5 to 30 weight percent of vinyl alcohol, allyl alcohol, vinyl esters, an ester of vinyl or allyl alcohol, styrene, isobutylene or diisobutylene, and
   (iii)from 3 to 30 weight percent of styrene sulfonic acid when (meth)acrylamido methylpropane sulfonic acid is present.

In this specification, the term (meth)acrylic means either acrylic or methacrylic, the term (meth)acrylamido means either acrylamido or methacrylamido and the term (meth)acrylamide means either acrylamide or methacrylamide.

According to the present invention, there is provided a method of controlling silica or silicate scale formation in an aqueous system in one of the following applications: cooling towers, boilers, sugar production, drive fluids used to enhance oil recovery and controlled temperature reduction systems in geothermal processes; which comprises adding to said system an effective amount of a scale inhibitor comprising:
a water-soluble terpolymer of (meth)acrylic or maleic acid, or salt thereof, of weight average molecular weight from 1,000 to 25,000, and wherein the terpolymer is formed from:
   a) from 30 to 80 weight percent of (meth)acrylic or maleic acid; and
   b) from greater than 11 to 65 weight percent of a (meth)acrylamido methylpropane sulfonic acid or styrene sulfonic acid; and
   c) one or more of:
      (i) from 5 to 30 weight percent of (meth)acrylamide or a substituted (meth)acrylamide; and
      (ii) from 5 to 30 weight percent of vinyl alcohol, allyl alcohol, an ester of vinyl or allyl alcohol, vinyl esters, styrene, isobutylene or diisobutylene; and
      (iii) from 3 to 30 weight percent of styrene sulfonic acid when (meth)acrylamido methylpropane sulfonic acid is present.

As used herein, an ester of vinyl or allyl alcohol includes the reaction product of (C₁-C₄) alkanoic acids with a vinyl or allyl alcohol, for example vinyl acetate.

The terpolymer may be derived from more than 3 monomers, i.e., one from a., one from b. and two or more from c.

We have found that the preferred additives are terpolymers of acrylic acid, AMPS and a substituted acrylamide, vinyl acetate or styrene. Most preferred is the terpolymer of 45 to 67 percent acrylic acid, 17 to 40 percent AMPS and 5 to 30 percent of tertiary butyl acrylamide, vinyl acetate, styrene or styrene sulfonic acid.

The amount of additives that provides a "scale inhibiting amount" will vary with the aqueous system being treated. Generally the amount will be in the range of 0.1 to 500 parts per million.

The prior art discloses several suitable synthesis methods for preparing the low molecular weight (meth)acrylic and maleic acid based polymers useful is the present invention.

US-A-4,314,004 is directed to one such suitable copolymer synthesis method and the disclosure thereof is incorporated herein by reference. This method requires a specific concentration range of a polymerization initiator and a specific molar ratio range of the initiator concentration and the concentration of certain metal salts to obtain the desired low molecular weight polymers useful in the present invention. The preferred polymerization initiators are peroxide compounds such as ammonium persulfate, potassium persulfate, hydrogen peroxide and t-butyl hydroperoxide. The preferred concentration range of the initiator is between about 1 to about 20 weight percent, based on the weight of monomers. The metal salt used to regulate molecular weight preferably includes cuprous and cupric chloride or bromide, cupric sulfate, cupric acetate, ferrous and ferric chloride, ferrous sulfate and ferric and ferrous phosphate. The molar ratio of the polymerisation initiator to the metal salt is preferably between about 40:1 to about 80:1. The homopolymers copolymers and terpolymers useful in this invention are preferably prepared in water at a polymer concentration of about 40 to about 50 weight percent, based on total weight of solution.

Another method useful to prepare these low molecular weight copolymers and terpolymers is described in US-A-4,301,266, the disclosure thereof also being incorporated herein by reference. In this process isopropanol is used as the molecular weight regulator as well as the reaction solvent. The reaction solvent may also be an aqueous mixture of isopropanol containing at least 45 weight percent isopropanol. The polymerization initiator is a free radical initiator such as hydrogen peroxide, sodium persulfate, potassium persulfate, or benzoyl peroxide. The polymerization is carried out under pressure at a temperature of 120° to 200°C. The concentration of the copolymer in the solvent is preferably 25 to 45 weight percent, based on the weight of the total solution. When polymerization is complete, the isopropanol is distilled from the reactor and the polymer may be neutralized with a base.

Still another method for preparing low molecular weight copolymers and terpolymers useful in this invention is described in US-A-3,646,099, the disclosure thereof also being incorporated herein by reference. This process is directed to the preparation of cyano-containing oligomers; however, it is also applicable for preparing low molecular weight polymers useful in the present invention. This process employs a bisulfite salt as the polymerization molecular weight regulator and the resulting polymers prepared thereby are sulfonate terminated. The preferred bisulfite salt is sodium bisulfite at a concentration of between 3 and 20 weight percent, based on the weight of monomers. The free radical polymerization initiator is ammonium, sodium or potassium persulfate, hydrogen peroxide or t-butyl hydroperoxide. The concentration of the initiator is between about 0.2 to about 10 weight percent, based on monomers. The polymerization temperature is preferably between 20° C and 65° C. and the concentration of the polymers in the aqueous solvent is between 25 and 55 weight percent, based on total solution weight.

The following Examples are presented to illustrate preferred embodiments of the present invention. All percentages are percentages by weight unless specified otherwise.

### Examples

### Evaluation of Inhibitors

The following test was employed to demonstrate the efficacy of the additives of the present invention for either preventing the precipitation of silica and silicate species or for the dispersing of these species. Although the exact mechanism of action of the inhibitors is not completely understood, an additive that minimizes the turbidity of the produced mixture is considered an effective silica and silicate inhibitor. Additives that produce a mixture in this test of less than eight nephelometric turbidity units (NTU) are considered improvements over the current available technology.

The test procedure used was one which simulated silica-laden process water conditions.
A 1% polymer solution was prepared and neutralized to pH 7.
A 1% salt inhibitor solution was prepared.
To a tared 226.8g (8 oz.) plastic bottle was added:
   1.44 g sodium silicate solution (34.8% active, Na₂:SiO₂::1:3.35)
   50.11 g Polished deionized water.
   Stir to Mix.
To a rinsed and dried 113.4g (4 oz.) jar was added:
   75 ml deionized water
   6.5 ml of the 1% sodium silicate solution prepared above.
   1.0 ml inhibitor or salt inhibitor solution.
The samples were then placed in a 70°C water bath with moderate shaking for 30 mins.
The samples were then removed from the bath and to them was added: (using a glass stir rod to stir between each addition)
   6.1 ml 1% by weight MgCl₂·6H₂O solution
   4.4 ml 1% by weight CaCl₂·2H₂O solution
   5.0 ml 1% by weight NaHCO₃ solution
   1.8 to 2.1 ml of 0.1 N HCl to adjust pH to 8 ±0.2

The samples were then replaced in the water bath for 30 minutes with moderate agitation and then removed from the bath and allowed to cool to room temperature for 1 hour.

The turbidity of the samples was measured in nephelometric turbidity units (NTU) using a model DRT100D turbidity meter, manufactured by HF Instruments Inc., Fort Myers, Florida.

The final concentrations of the ions in the test solution were as follows:
500 ppm Si, as SiO₂
   300 ppm Ca⁺², as CaCO₃
   300 ppm Mg⁺², as CaCO₃
   300 ppm HCO3⁻, as CaCO₃
   100 ppm inhibitor, as acid
   0, 80 or 140 mg/l ionic additive

Higher turbidity in the sample indicates more precipitate was formed. Lower turbidity indicates the mixture is inhibited from precipitating. The results of this test are presented in Table I.

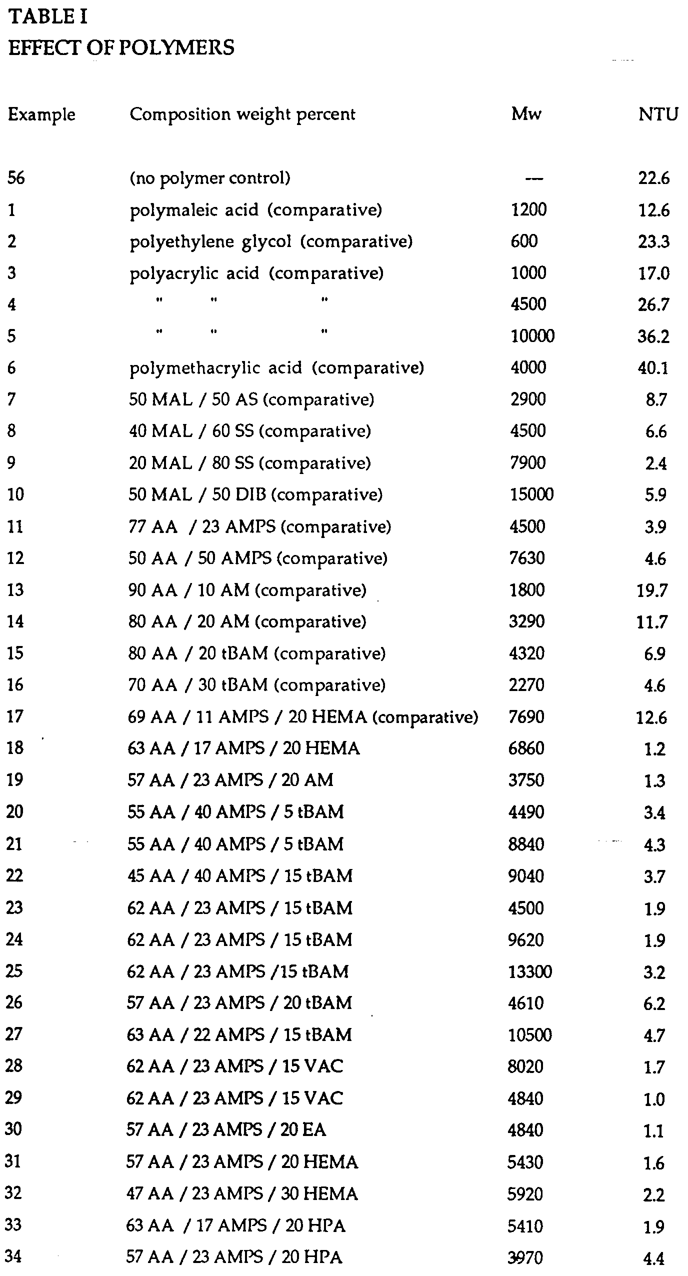

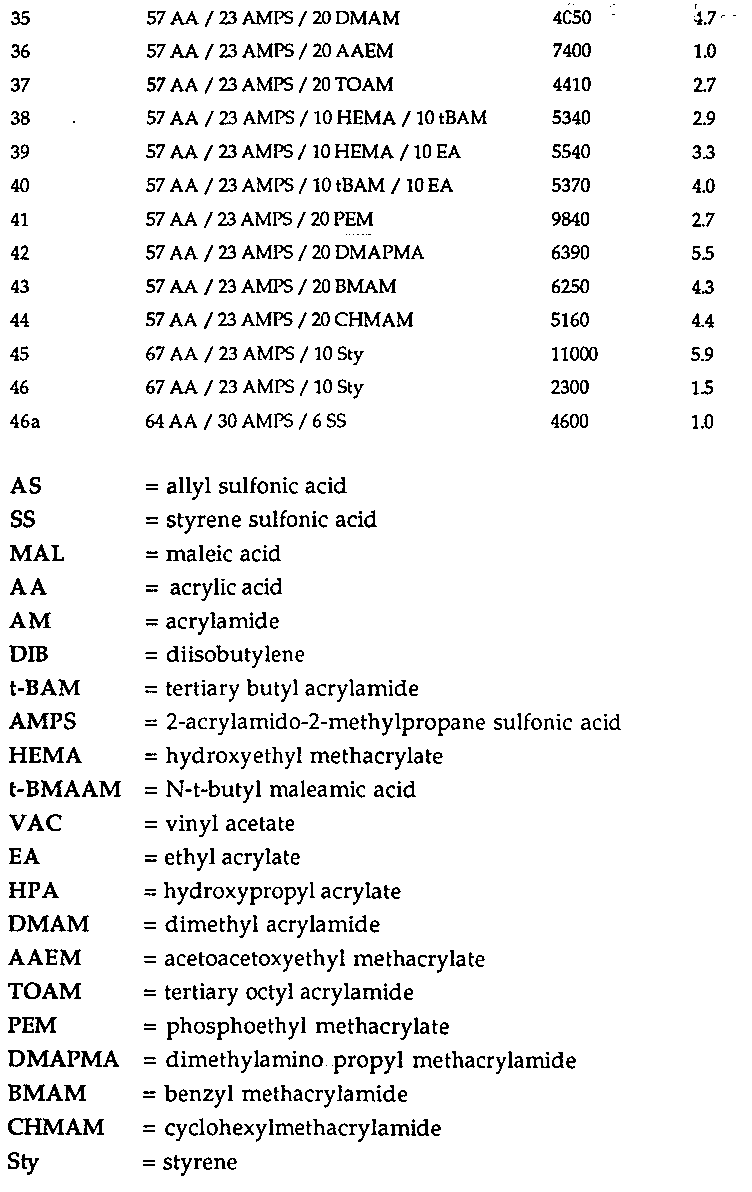

In Table I, Examples 1-17, are shown for comparative purposes. These polymers are presently used as scale inhibitors, but can be seen to be inadequate for controlling silica and silicate scaling. Example 1 is of particular interest because it is generally believed to be the most effective of the conventional technology for silica control. Examples 18-46 show the improvement with terpolymers of the present invention. Example 7 demonstrates that a conventional allyl sulfonic acid containing polymer proposed in the prior art, does not provide the degree of inhibition shown by compositions of the present invention.

Similarly, Examples 13 and 14 which demonstrate copolymers proposed in the prior art to control silica are also less effective. Example 17 illustrates the need for greater than 11 weight percent AMPS on a terpolymer to achieve effective control.

## Claims

1. A method of controlling silica or silicate scale formation in an aqueous system in one of the following applications: boilers, cooling towers, sugar production, drive fluids used to enhance oil recovery and controlled temperature reduction systems in geothermal processes; which comprises adding to said system an effective amount of a scale inhibitor comprising:
a water-soluble terpolymer of (meth)acrylic or maleic acid, or salt thereof, of weight average molecular weight from 1,000 to 25,000, and wherein:
the terpolymer is formed from:
a) from 30 to 80 weight percent of (meth)acrylic or maleic acid; and
b) from greater than 11 to 65 weight percent of a (meth)acrylamido methylpropane sulfonic acid or styrene sulfonic acid; and
c) one or more of:
(i) from 5 to 30 weight percent of (meth)acrylamide or a substituted (meth)acrylamide; and
(ii) from 5 to 30 weight percent of vinyl alcohol, allyl alcohol, an ester of vinyl or allyl alcohol, vinyl esters, styrene, isobutylene or diisobutylene; and
(iii) from 3 to 30 weight percent of styrene sulfonic acid when (meth)acrylamido methylpropane sulfonic acid is present.

2. Method according to claim 1, wherein said water-soluble terpolymer has a weight average molecular weight of from 2,000 to 10,000.

3. A method as claimed in claim 1 or claim 2, wherein said (meth)acrylamido methyl propane sulfonic acid is characterized by the formula: 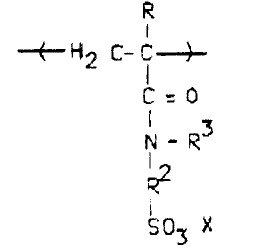 wherein R is H or CH₃, X is H or metal cation, R² is C₁₋₈ alkyl or phenyl and R³ is H or C₁₋₄ alkyl.

4. A method as claimed in any preceding claim, wherein said substituted (meth)acrylamide is characterized by the formula: 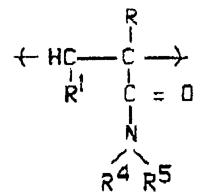 wherein R¹ is H or COOX, X is H or metal cation, R⁴ and R⁵ are each independently either H or a C₁₋₈ alkyl, but cannot be H, and R is H or CH₃.

5. A method as claimed in any preceding claim, wherein said vinyl esters are characterized by the formula: 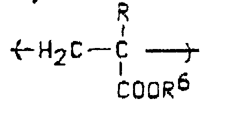 wherein R is H or CH₃, R⁶ is a C₁₋₆alkyl, a C₆₋₁₀ aryl or aralkyl, or 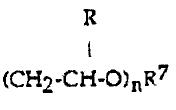 where n is 1-3, R⁷ is H, a C₁₋₆ alkyl or PO₃X where X is H or metal cation.

6. A method as claimed in any preceding claim, wherein said water-soluble terpolymer comprises from 45 to 67 weight percent acrylic acid, from 17 to 40 weight percent 2-acrylamido-2-methyl propane sulfonic acid, and from 5 to 30 weight percent of a third unit selected from acrylamide, substituted acrylamide, vinyl alcohol, allyl alcohol, an ester of vinyl or allyl alcohol, vinyl esters, vinyl acetate and styrene.

7. A method according to any preceding claim, wherein said water soluble terpolymer comprise; from 45 to 75 wt% acrylic acid, from 17 to 40 wt% 2-acrylamido-2-methyl propane sulfonic acid and from 4 to 10 wt% of styrene sulfonic acid.

8. A method as claimed in any preceding claim, wherein the scale inhibiting amount is in the range of 0.1 to 500 parts per million.

9. A method as claimed in any preceding claim, wherein the (meth)acrylic or maleic acid copolymer comprises from 20 to 85 weight percent of (meth)acrylic or maleic acid.

## Patentansprüche

1. Verfahren zum Kontrollieren der Silica- oder Silicat-Krustenbildung in einem wäßrigen System in einem der folgenden Anwendungen: Boiler, Kühltürme, Zuckerherstellung, Antriebsflüssigkeiten, verwendet zum Erhöhen der Ölrückgewinnung, und Temperaturverminderungskontrollsysteme in geothermischen Verfahren, welches das Zugeben zu dem System einer effektiven Menge eines Krusteninhibitors umfaßt, umfassend:
ein wasserlösliches Terpolymer von (Meth)acrylsäure oder Maleinsäure oder ein Salz davon mit einem Gewichtsmittel des Molekulargewichts von 1.000 bis 25.000 und worin:
das Terpolymer gebildet ist aus:
a) 30 bis 80 Gew.-% (Meth)acrylsäure oder Maleinsäure; und
b) mehr als 11 bis 65 Gew.-% einer (Meth)acrylamidomethylpropansulfonsäure oder Styrolsulfonsäure; und
c) einem oder mehreren von:
(i) 5 bis 30 Gew.-% (Meth)acrylamid oder einem substituierten (Meth)acrylamid; und
(ii) 5 bis 30 Gew.-% Vinylalkohol, Allylalkohol, einem Ester von Vinyl- oder Allylalkohol, Vinylestern, Styrol, Isobutylen oder Diisobutylen; und
(iii) 3 bis 30 Gew.-% Styrolsulfonsäure, wenn (Meth)acrylamidomethylpropansulfonsäure vorliegt.

2. Verfahren nach Anspruch 1, wobei das wasserlösliche Terpolymer ein Gewichtsmittel des Molekulargewichts von 2.000 bis 10.000 aufweist.

3. Verfahren nach Anspruch 1 oder 2, wobei die (Meth)acrylamidomethylpropansulfonsäure durch die Formel gekennzeichnet ist: 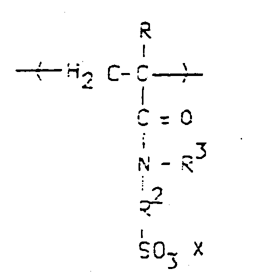 worin R H oder CH₃, X H oder ein Metallkation, R² C₁₋₈-Alkyl oder Phenyl und R³ H oder C₁₋₄-Alkyl sind.

4. Verfahren nach einem vorhergehenden Anspruch, wobei das substituierte (Meth)acrylamid durch die Formel gekennzeichnet ist: 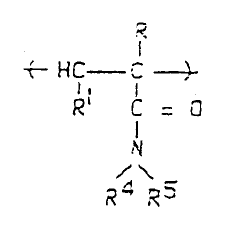 worin R¹ H oder COOX, X H oder ein Metallkation, R⁴ und R⁵ jeweils unabhängig entweder H oder ein C₁₋₈-Alkyl, wobei beide nicht H sein können, und R H oder CH₃ sind.

5. Verfahren nach einem vorhergehenden Anspruch, wobei die Vinylester durch die Formel gekennzeichnet sind: 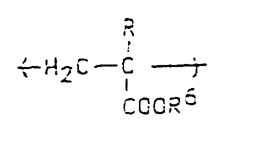 worin R H oder CH₃, R⁶ ein C₁₋₆-Alkyl, ein C₆₋₁₀-Aryl oder Aralkyl oder 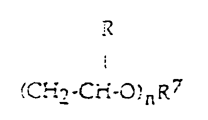 sind, worin n 1-3, R⁷ H, ein C₁₋₆-Alkyl oder PO₃X sind, wobei X H oder ein Metallkation ist.

6. Verfahren nach einem vorhergehenden Anspruch, wobei das wasserlösliche Terpolymer 45 bis 67 Gew.-% Acrylsäure, 17 bis 40 Gew.-% 2-Acrylamido-2-methylpropansulfonsäure und 5 bis 30 Gew.-% einer dritten Einheit, ausgewählt aus Acrylamid, substituiertem Acrylamid, Vinylalkohol, Allylalkohol, einem Ester von Vinyl- oder Allylalkohol, Vinylestern, Vinylacetat und Styrol, umfaßt.

7. Verfahren nach einem vorhergehenden Anspruch, wobei das wasserlösliche Terpolymer 45 bis 75 Gew.-% Acrylsäure, 17 bis 40 Gew.- % 2-Acrylamido-2-methylpropansulfonsäure und 4 bis 10 Gew.- % Styrolsulfonsäure umfaßt.

8. Verfahren nach einem vorhergehenden Anspruch, wobei die Krusten-inhibierende Menge in dem Bereich von 0,1 bis 500 ppm liegt.

9. Verfahren nach einem vorhergehenden Anspruch, wobei das (Meth)acryl- oder Maleinsäurecopolymer 20 bis 85 Gew.-% (Meth)acrylsäure oder Maleinsäure umfaßt.

## Revendications

1. Procédé pour maîtriser la formation de tartre de silice ou de silicate dans un système aqueux dans l'une des applications suivantes :
chaudières, tours de refroidissement, production de sucre, fluides d'entraînement utilisés pour renforcer la récupération du pétrole, et systèmes à réduction de température contrôlée dans les processus géothermiques; qui comprend l'addition audit système d'une quantité efficace d'un inhibiteur de tartre comprenant :
un terpolymère soluble dans l'eau d'acide (méth)acrylique ou maléique, ou un de ses sels, ayant une masse moléculaire moyenne en masse de 1 000 à 25 000, et dans lequel :
le terpolymère est formé à partir de :
a) 30 à 80 % en poids d'acide (méth)acrylique ou maléique; et
b) plus de 11 à 65 % en poids d'un acide (méth)acrylamidométhylpropanesulfonique ou d'acide styrènesulfonique; et
c) l'un ou plusieurs parmi :
(i) 5 à 30 % en poids de (méth)acrylamide ou d'un (méth)acrylamide substitué; et
(ii) 5 à 30 % en poids d'alcool vinylique, d'alcool allylique, d'un ester d'alcool vinylique ou allylique, d'esters de vinyle, de styrène, d'isobutylène ou de diisobutylène; et
(iii) 3 à 30 % en poids d'acide styrènesulfonique quand de l'acide (méth)acrylamidométhylpropanesulfonique est présent.

2. Procédé selon la revendication 1, dans lequel ledit terpolymère soluble dans l'eau a une masse moléculaire moyenne en masse de 2 000 à 10 000.

3. Procédé selon la revendication 1 ou 2, dans lequel ledit acide (méth)acrylamidométhylpropanesulfonique est caractérisé par la formule : 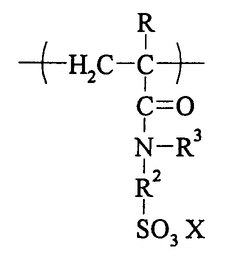 dans laquelle R est H ou CH₃, X est H ou un cation métallique, R² est un radical alkyle en C₁ à C₈ ou phényle, et R³ est H ou un radical alkyle en C₁ à C₄.

4. Procédé selon l'une quelconque des revendications précédentes, dans lequel ledit (méth)acrylamide substitué est caractérisé par la formule : 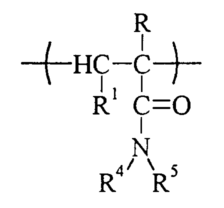 dans laquelle R¹ est H ou COOX, X est H ou un cation métallique, chacun de R⁴ et R⁵ est indépendamment H ou un radical alkyle en C₁ à C₈, mais ils ne peuvent pas être tous les deux H, et R est H ou CH₃.

5. Procédé selon l'une quelconque des revendications précédentes, dans lequel lesdits esters de vinyle sont caractérisés par la formule : 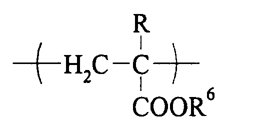 dans laquelle R est H ou CH₃, R⁶ est un radical alkyle en C₁ à C₆ ou un radical aryle ou aralkyle en C₆ à C₁₀, ou bien 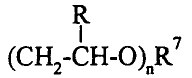 où n vaut de 1 à 3, R⁷ est H, un radical alkyle en C₁ à C₆ ou PO₃X où X est H ou un cation métallique.

6. Procédé selon l'une quelconque des revendications précédentes, dans lequel ledit terpolymère soluble dans l'eau comprend 45 à 67 % en poids d'acide acrylique, 17 à 40 % en poids d'acide 2-acrylamido-2-méthylpropanesulfonique, et 5 à 30 % en poids d'un troisième motif choisi parmi l'acrylamide, un acrylamide substitué, l'alcool vinylique, l'alcool allylique, un ester d'alcool vinylique ou allylique, les esters de vinyle, l'acétate de vinyle et le styrène.

7. Procédé selon l'une quelconque des revendications précédentes, dans lequel ledit terpolymère soluble dans l'eau comprend 45 à 75 % en poids d'acide acrylique, 17 à 40 % en poids d'acide 2-acrylamido-2-méthylpropanesulfonique et 4 à 10 % en poids d'acide styrènesulfonique.

8. Procédé selon l'une quelconque des revendications précédentes, dans lequel la quantité inhibitrice de tartre est située dans la plage allant de 0,1 à 500 parties par million.

9. Procédé selon l'une quelconque des revendications précédentes, dans lequel le copolymère d'acide (méth)acrylique ou maléique comprend 20 à 85 % en poids d'acide (méth)acrylique ou maléique.
